# FASCICULE DE BREVET EUROPEEN

(11) **EP 1 832 728 B1**
(45) Date de publication et mention de la délivrance du brevet: **07.10.2009**
(21) Numéro de dépôt: 07300800.5
(22) Date de dépôt: 20.02.2007
(51) Int. Cl.: F01N 3/025, F01N 7/00, F01N 9/00, F01N 3/027

(54) **Dispositif de dépollution des gaz d'échappement d'un moteur à combustion interne**
Verfahren zur Reinigung von Abgasen eines Verbrennungsmotors
Device for pollution control of the exhaust gases from an internal combustion engine

(30) Priorité: 20.02.2006 FR 0650575
(43) Date de publication de la demande: 12.09.2007
(73) Titulaire: Renault SAS, 92100 Boulogne Billancourt (FR)
(72) Inventeur: DANEAU, Marc, 92100, BOULOGNE (FR); GRUSON, Xavier, 75017, PARIS (FR); BODIN, Marc, 92500, RUEIL MALMAISON (FR); BONTE, Didier, 92000, NANTERRE (FR)

(56) Documents cités:
- EP-A- 1 234 959
- EP-A- 1 479 900
- EP-A- 1 600 612
- WO-A-20/04099578
- US-A1- 2004 200 271

## Description

La présente invention concerne les procédés de dépollution des gaz d'échappement de moteurs à combustion interne de véhicules automobiles, et plus particulièrement procédés pour régénérer un système de filtrage des particules d'un moteur.

Le système de filtrage des particules comporte un filtre à particules qui capture des particules de suies émises par le moteur. Pour éviter son colmatage, on réalise des phases périodiques de régénération du filtre qui permettent de brûler les particules piégées, en élevant la température des gaz d'échappement de sorte que l'on obtienne une température au niveau du filtre à particules comprise entre 570°C et 650°C.

II existe des procédés pour régénérer le filtre à particules. Le document FR2831923 propose un procédé d'alimentation en carburant sur la base de diverses conditions du moteur de façon à éliminer les particules stockées. Le procédé commande un système d'injection dans les cylindres (ou chambres de combustion) du moteur et un système d'injection dans la ligne d'échappement du moteur. Par exemple, lorsque le moteur fonctionne sous une faible charge, le système d'injection de carburant dans les chambres de combustion est utilisé pour réchauffer les gaz d'échappement du moteur, en réalisant une injection secondaire.

Un inconvénient de ce procédé est que lorsque le système de filtrage se trouve éloigné du système d'injection dans les chambres de combustion du moteur, comme c'est le cas par exemple lorsque le système de filtrage se trouve sous le plancher du véhicule, il n'est pas toujours possible d'activer la régénération, car la température de seuil du catalyseur pour brûler le carburant provenant de l'injection secondaire n'est pas toujours atteinte.

Document US 2004/0200271 A, décrit un procédé de dépollution des gaz d'échappement d'un moteur à combustion interne comportant une étape de détection du besoin d'enclencher une régénération d'un système de filtrage des particules muni d'un catalyseur d'oxidation et un filtre à particules et une étape d'activation d'une régénération, l'étape d'activation comportant une étape de commande d'un système d'injection de carburant dans le circuit d'échappement, en amont du système de filtrage, lorsque la valeur du catalyseur d'oxidation du système de filtrage est supérieure à un seuil, et une étape de commande d'un système d'injection de carburant dans les cylindres du moteur, en amont d'un catalyseur d'oxydation supplémentaire, pour augmenter la température des gaz d'échappement.

Le document W02004099578 propose un procédé de régénération dans lequel le système d'injection de carburant dans les cylindres est prévu pour obtenir une certaine concentration d'oxygène dans le flux de gaz d'échappement, sans donner une augmentation de réaction exothermique qui pourrait endommager la turbine du turbocompresseur qui se trouve en aval.

Un objectif de l'invention est de pallier aux inconvénients décrits ci-dessus, en fournissant un procédé capable d'activer une régénération quelques soient les conditions du moteur et indépendamment de la distance à laquelle se trouve le système de filtrage.

L'invention fournit dans ce but un procédé de dépollution des gaz d'échappement d'un moteur à combustion interne qui comporte une étape de détection du besoin d'enclencher une régénération d'un système de filtrage des particules et une étape d'activation d'une régénération. Selon l'invention, l'étape d'activation comporte :
- une étape de commande d'un système d'injection de carburant dans les cylindres du moteur pour augmenter la température des gaz d'échappement en amont d'un catalyseur supplémentaire, placé en amont d'un système d'injection de carburant dans le circuit d'échappement du moteur, selon un premier mode de fonctionnement ;
- une étape de commande du système d'injection de carburant dans les cylindres du moteur pour augmenter la température du catalyseur supplémentaire, selon un deuxième mode de fonctionnement, lorsque la valeur TSDOC1 de température du catalyseur d'oxydation supplémentaire est supérieure à un seuil TADOC1 ;
- une étape de commande du système d'injection de carburant dans le circuit d'échappement lorsque la valeur TSDOC2 du catalyseur du système de filtrage est supérieure à un seuil TADOC2.

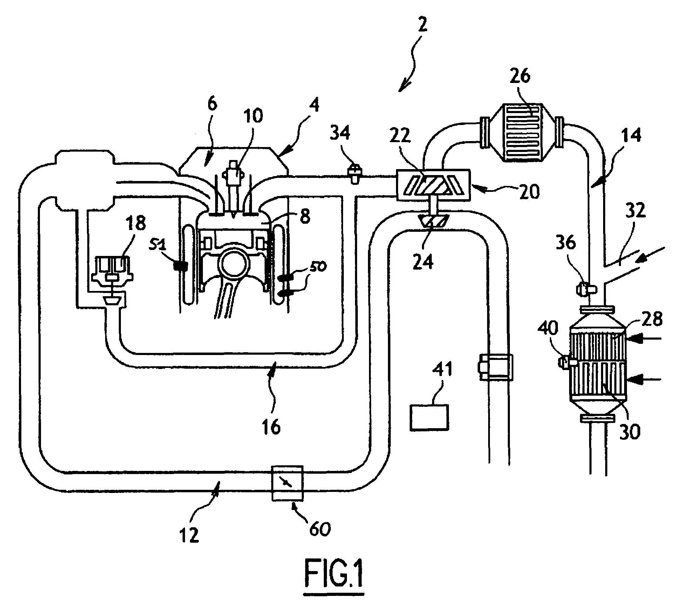

Le procédé selon l'invention, et ses avantages seront mieux compris à la lecture de la description détaillée d'un mode de réalisation pris à titre d'exemple et nullement limitatif, et illustré par le schéma de la figure 1.

En référence à la figure 1, le moteur 2 du présent mode de réalisation de l'invention comprend une culasse 4 renfermant des cylindres 6 dans lesquels sont montés mobiles des pistons 8 et dans lesquels débouchent des injecteurs de carburant 10.

Le moteur 2 comprend un circuit d'admission 12 débouchant dans les cylindres 6 et un circuit d'échappement 14 dont l'entrée se situe au niveau de ces mêmes cylindres. Le moteur 2 comprend un circuit 16 de recirculation des gaz d'échappement ou EGR permettant de prélever une fraction des gaz d'échappement en sortie des cylindres pour les réinjecter dans le circuit d'admission. Ce circuit d'EGR comprend notamment une vanne commandable 18. Le circuit EGR est fermé lorsque l'on réalise une régénération du filtre à particules.

Le moteur 2 comprend un turbocompresseur 20 comprenant une turbine 22 mise en mouvement par les gaz d'échappement parcourant le circuit 14 et reliée à un compresseur 24 produisant une compression des gaz parcourant le circuit d'admission 12.

Le dispositif de dépollution des gaz d'échappement du moteur comporte des composants qui se trouvent dans le circuit d'échappement 14. Ces composants consistent en un système de filtrage comportant un filtre à particules 30, un catalyseur d'oxydation 28 placé en amont du filtre à particules 30, un capteur de température 40 qui fournit une valeur TSDOC2, placé entre le filtre à particules 30 et le catalyseur d'oxydation 28.

Le filtre à particules 30 peut être un filtre à particules catalytique contenant une couche de matériau catalyseur.

Le capteur de température 40 mesure la température des gaz d'échappement qui circulent entre le catalyseur d'oxydation 28 et le filtre à particules 30 ; on utilise la valeur TSDOC2 pour connaître la température de sortie du catalyseur d'oxydation 28 et aussi la température d'entrée du filtre à particules 30. On considère que ces deux températures sont équivalentes.

Le dispositif de dépollution comporte également une unité électronique de commande 41, encore appelé calculateur. Cette unité 41 est apte à recevoir des données de différents capteurs, comme le capteur de température 40 qui fournit la donnée TSDOC2, et est apte à commander les différents organes du moteur et du dispositif de dépollution.

Le dispositif de dépollution comporte également un système 10 d'injection de carburant dans les chambres 8 de combustion du moteur 2. Ce système 10 d'injection, commandé par l'unité 41, est capable d'injecter du carburant pour générer du couple et aussi pour augmenter la température des gaz d'échappement

Le dispositif de dépollution comporte également un système 32 d'injection de carburant placé dans le circuit d'échappement du moteur 2 en amont du catalyseur d'oxydation 28. Ce système 32 est utilisé lorsque la valeur de TSDOC2 est supérieure ou égale à une température de seuil, appelée TADOC2, pour l'activation du catalyseur d'oxydation 28.

Le dispositif est remarquable en ce qu'il comporte également des moyens supplémentaires pour réchauffer les gaz d'échappement en amont du catalyseur d'oxydation 28.

Ces moyens supplémentaires comportent un catalyseur d'oxydation supplémentaire 26, un capteur 36 qui fournit une valeur TSDOC1. Conformément à l'unique figure, le catalyseur d'oxydation supplémentaire 26 est placé en amont du système 32 d'injection de carburant placé dans le circuit d'échappement du moteur 2 .Le capteur 36 est placé entre le catalyseur 28 et le catalyseur supplémentaire 26. En plus du catalyseur 28 et du capteur supplémentaire 36, le système 10 d'injection de carburant dans les chambres 8 de combustion du moteur 2 est utilisé pour apporter du carburant sous forme gazeuse au catalyseur supplémentaire 26 lorsque la valeur de TSDOC1 est supérieure ou égale à une température de seuil, appelée TADOC1, pour l'activation du catalyseur d'oxydation supplémentaire 26.

Les moyens supplémentaires peuvent comporter également un système pour réduire le débit de gaz d'admission, de manière à augmenter la richesse. Dans cet exemple de réalisation non limitatif, l'unité électronique de commande 41 peut agir sur le boîtier papillon 60 qui se trouve dans le circuit d'admission 12, de manière à limiter le débit de gaz d'admission entrant dans les cylindres 8 du moteur. On a ainsi la richesse, c'est-à-dire le rapport entre le carburant et les gaz d'admission, qui est augmenté, ce qui augmente la température des gaz d'échappement.

Le procédé de dépollution, mis en oeuvre par le dispositif de dépollution des gaz d'échappement décrit ci-dessus, comporte une étape de détection du besoin d'enclencher une régénération du système de filtrage des particules et une étape d'activation d'une régénération. L'étape de détection du besoin peut se faire par tout procédé connu de l'homme du métier, comme par exemple l'utilisation d'un capteur de pression différentielle (non représenté) disposé aux bornes du système de filtrage, ou encore grâce à une cartographie enregistrée dans la mémoire de l'unité 41 pour déterminer le chargement en particules du filtre 30 en fonction des conditions de fonctionnement du moteur.

Selon l'invention, l'étape d'activation de la régénération comporte :
- une étape de commande du système 10 d'injection de carburant dans les cylindres 8 du moteur 2 pour augmenter la température des gaz d'échappement en amont du catalyseur supplémentaire 26, placé en amont d'un système d'injection de carburant dans le circuit d'échappement du moteur, selon un premier mode de fonctionnement ;
- une étape de commande du système d'injection 10 de carburant dans les cylindres 8 du moteur 2 pour augmenter la température du catalyseur supplémentaire 26, selon un deuxième mode de fonctionnement, lorsque la valeur de TSDOC1 est supérieure au seuil TADOC1 ;
- une étape de commande du système 32 d'injection de carburant dans la ligne d'échappement lorsque la valeur de TSDOC2 du catalyseur du système de filtrage est supérieure au seuil TADOC2.

Le procédé peut également comporter une étape de mesure de la valeur de TSDOC1.

Le premier mode de fonctionnement du système 10 d'injection dans les cylindres 8 du moteur 2 peut consister à décaler l'injection principale de carburant. Le système peut augmenter la quantité de carburant injecté pour garder la valeur de couple demandée par l'utilisateur du véhicule. Dans ce premier mode de fonctionnement, le système d'injection 10 peut également faire une « post injection » rapprochée. Par « post injection » rapprochée on entend une injection de carburant supplémentaire qui a lieu avant un angle de vilebrequin prédéterminé. Le carburant de cette injection supplémentaire brûle dans les cylindres 8 du moteur 2. Ce premier mode de fonctionnement peut utiliser soit le décalage de l'injection principale, soit la post injection rapprochée, soit les deux ensemble.

Dans ce premier mode de fonctionnement du système d'injection, il est question de faire monter la température des gaz d'échappement en amont du catalyseur d'oxydation supplémentaire 26, notamment pour que ce dernier atteigne sa température d'activation, température qui permet l'oxydation du carburant gazéifié.

Lorsque la valeur de TSDOC1 fournie par le capteur de température 36 est supérieure au seuil TADOC1 permettant l'activation du catalyseur d'oxydation supplémentaire 26, le système 10 d'injection peut être commandé selon un deuxième mode de fonctionnement. Dans ce mode de fonctionnement, le système 10 d'injection peut réaliser une « post injection » éloignée, c'est-à-dire une injection supplémentaire qui a lieu après un angle de vilebrequin prédéterminé. Le carburant de cette injection supplémentaire ne brûle pas dans les cylindres 8 du moteur 2, mais il sera gazéifié et brûlera dans le catalyseur d'oxydation 26. Ceci permet d'augmenter la température du catalyseur d'oxydation supplémentaire 26 et les gaz d'échappement qui sortent de ce catalyseur 26. Dans ce deuxième mode de fonctionnement, le système 10 d'injection peut réaliser cette post injection éloignée en plus des injections décrites dans le premier mode de fonctionnement.

Grâce à ce dispositif et à son procédé, il est ainsi possible de réchauffer les gaz d'échappement en amont du catalyseur d'oxydation 28 placé dans le système de filtrage de façon beaucoup plus importante que dans les dispositifs et les procédés connus. Ceci présente un avantage notamment lorsque les dispositifs de filtrage se trouvent sous le plancher du véhicule, car dans cette configuration les pertes thermiques des gaz d'échappement peuvent empêcher l'activation d'une régénération.

Les moyens supplémentaires pour réchauffer les gaz d'échappement en amont du catalyseur d'oxydation 28 peuvent comporter un système pour augmenter la charge sur le moteur. Ce système comporte un alternateur (non représenté), entraîné par le moteur, qui alimente des sources consommatrices d'énergie électrique. Les sources consommatrices d'énergie peuvent comporter, de manière non limitative, des thermoplongeurs 50 réchauffant le liquide de refroidissement du moteur. L'unité 41 commande l'activation de un ou plusieurs thermoplongeurs en fonction du besoin de charge à appliquer. La charge appliquée sur le moteur se traduit par un critère de charge appliquée sur l'alternateur, par exemple 90% de la capacité totale de l'alternateur. Le procédé de dépollution peut également comporter une étape d'activation du critère de charge minimum à appliquer sur le moteur, en utilisant le système pour augmenter la charge sur le moteur.

Ce système pour augmenter la charge sur le moteur est utilisé principalement lorsque le moteur se trouve au ralenti et à très faibles charges.

Les sources consommatrices d'énergie peuvent comporter un système électrique de chauffage des gaz d'échappement (non représenté). Ce système est placé dans le circuit d'échappement 14 en amont du catalyseur d'oxydation 28. II peut aussi être placé en amont du catalyseur supplémentaire 26. L'avantage de cette source consommatrice d'énergie est quelle permet d'augmenter la charge sur le moteur pour augmenter la température d'échappement et aussi de réchauffer directement les gaz d'échappement.

Avec ces moyens supplémentaires, il est possible de d'activer une régénération quelques soient les conditions de fonctionnement du moteur.

Cependant, afin de ne pas activer une régénération à des moments qui ne seraient pas opportuns pour le moteur, le dispositif peut comporter un moyen de mesure de la température du moteur. L'unité 41 reçoit l'information de température du liquide de refroidissement du moteur provenant d'un capteur 51 et la compare à une valeur de seuil. Ce moyen évite ainsi d'activer une régénération lorsque le moteur est froid, car elle pourrait endommager ce dernier.

De même, pour ne pas nuire à l'agrément de conduite, le dispositif peut comporter un moyen de mesure de la vitesse du véhicule. L'unité 41 reçoit une information du capteur (non représenté) de vitesse du véhicule, et la compare à une valeur de seuil. Ce moyen peut, par exemple, éviter d'activer une régénération lorsque le véhicule est à l'arrêt.

## Revendications

1. Procédé de dépollution des gaz d'échappement d'un moteur à combustion interne comportant :
- une étape de détection du besoin d'enclencher une régénération d'un système de filtrage des particules muni d'un catalyseur d'oxydation (28) et un filtre à particules (30),
- et une étape d'activation d'une régénération, l'étape d'activation comportant une étape de commande d'un système (32) d'injection de carburant dans le circuit d'échappement, en amont du système de filtrage, lorsque la valeur (TSDOC2) de temperature du catalyseur d'oxydation (28) du système de filtrage est supérieure à un seuil (TADOC2) de temperature, et une étape de commande d'un système (10) d'injection de carburant dans les cylindres (8) du moteur (2), en amont d'un catalyseur d'oxydation supplémentaire (26), pour augmenter la température des gaz d'échappement,
**caractérisé en ce qu'**il comporte une étape de mesure de la valeur (TSDOC1) de temperature du catalyseur d'oxydation supplémentaire (26), et **en ce que** l'étape de commande du système (10) d'injection de carburant dans les cylindres (8) du moteur (2) a lieu selon un premier mode de fonctionnement pour augmenter la température des gaz d'échappement, et selon un deuxième mode de fonctionnement, pour augmenter la température du catalyseur supplémentaire (26), lorsque la valeur (TSDOC1) de température du catalyseur d'oxydation supplémentaire est supérieure à un seuil (TADOC1).

2. Procédé selon la revendication 1, **caractérisé en ce que** l'étape d'activation comporte une étape de commande d'un système pour réduire le débit de gaz d'admission.

3. Procédé selon la revendication 1 ou 2, **caractérisé en ce qu'**il comporte une étape d'activation d'un critère de charge minimum à appliquer sur le moteur (2).

4. Procédé selon l'une quelconque des revendications précédentes, **caractérisé en ce qu'**il comporte une étape de détection des conditions du moteur (2) et du véhicule, consistant à mesurer de la température du moteur (2) et/ou la vitesse du véhicule, à comparer les mesures à des seuils, pour permettre l'activation de la régénération.

5. Procédé selon l'une quelconque des revendications précédentes, **caractérisé en ce que** le premier mode de fonctionnement du système (10) d'injection de carburant dans les cylindres (8) consiste à décaler l'injection principale de carburant.

6. Procédé selon l'une quelconque des revendications précédentes, **caractérisé en ce que** le premier mode de fonctionnement du système (10) d'injection de carburant dans les cylindres (8) consiste à faire une « post injection » rapprochée.

7. Procédé selon l'une quelconque des revendications précédentes, **caractérisé en ce que** le deuxième mode de fonctionnement du système (10) d'injection de carburant dans les cylindres (8) consiste à faire une « post injection » éloignée.

## Claims

1. A method for pollution control of the exhaust gases from an internal combustion engine, comprising:
- a step of detecting the need to initiate a regeneration of a particle filtering system provided with an oxidation catalyst (28) and a particulate filter (30), and
- a step of activating a regeneration, the activation step comprising a step of actuating a system (32) for injecting fuel into the exhaust circuit, upstream of the filtering system, when the temperature value (TSDOC2) of the oxidation catalyst (28) of the filtering system is above a temperature threshold (TADOC2), and a step of actuating a system (10) for injecting fuel into the cylinders (8) of the engine (2), upstream of an additional oxidation catalyst (26), in order to increase the temperature of the exhaust gases,
**characterized in that** it comprises a step of measuring the temperature value (TSDOC1) of the additional oxidation catalyst (26), and **in that** the step of actuating the system (10) for injecting fuel into the cylinders (8) of the engine (2) takes place, according to a first mode of operation, to increase the temperature of the exhaust gases and, according to a second mode of operation, to increase the temperature of the additional catalyst (26) when the temperature value (TSDOC1) of the additional oxidation catalyst is above a threshold (TADOC1).

2. Method according to Claim 1, **characterized in that** the activation step comprises a step of actuating a system for reducing the flow rate of intake gas.

3. Method according to Claim 1 or 2, **characterized in that** it comprises a step of activating a minimum load criterion to be applied to the engine (2).

4. Method according to any one of the preceding claims, **characterized in that** it comprises a step of detecting the conditions of the engine (2) and of the vehicle, consisting in measuring the temperature of the engine (2) and/or the speed of the vehicle, and in comparing the measurements with thresholds, in order to allow activation of the regeneration.

5. Method according to any one of the preceding claims, **characterized in that** the first mode of operation of the system (10) for injecting fuel into the cylinders (8) consists in delaying the main fuel injection.

6. Method according to any one of the preceding claims, **characterized in that** the first mode of operation of the system (10) for injecting fuel into the cylinders (8) consists in carrying out a close "post-injection".

7. Method according to any one of the preceding claims, **characterized in that** the second mode of operation of the system (10) for injecting fuel into the cylinders (8) consists in carrying out a remote "post-injection".

## Patentansprüche

1. Verfahren zur Reinigung der Abgase eines Verbrennungsmotors, das Folgendes umfasst:
- einen Schritt zur Erfassung des Einschaltens einer Regeneration eines Systems zur Filterung der Teilchen, das mit einem Oxidationskatalysator (28) und einem Teilchenfilter (30) versehen ist,
- und einen Schritt der Aktivierung einer Regeneration, wobei der Aktivierungsschritt einen Schritt der Betätigung eines Systems (32) zur Einspritzung von Kraftstoff in den Abgaskreis stromaufwärts des Filtersystems, wenn der Temperaturwert (TSDOC2) des Oxidationskatalysators (28) des Filtersystems über einem Temperaturschwellwert (TADOC2) liegt, und einen Schritt der Betätigung eines Systems (10) zur Einspritzung von Kraftstoff in die Zylinder (8) eines Motors (2) stromaufwärts eines zusätzlichen Oxidationskatalysators (26), um die Temperatur des Abgases zu erhöhen, umfasst,
**dadurch gekennzeichnet, dass** es einen Schritt der Messung des Temperaturwerts (TSDOC1) des zusätzlichen Oxidationskatalysators (26) umfasst, und dass der Schritt der Betätigung des Systems (10) zur Einspritzung von Kraftstoff in die Zylinder (8) des Motors (2) gemäß einem ersten Betriebsmodus, um die Temperatur des Abgases zu erhöhen, und gemäß einem zweiten Betriebsmodus, um die Temperatur des zusätzlichen Katalysators (26) zu erhöhen, erfolgt, wenn der Temperaturwert (TSDOC1) des zusätzlichen Oxidationskatalysators über einem Temperaturschwellwert (TADOC1) liegt.

2. Verfahren nach Anspruch 1, **dadurch gekennzeichnet, dass** der Aktivierungsschritt einen Schritt der Betätigung eines Systems zur Reduzierung des Einlassgasdurchflusses umfasst.

3. Verfahren nach Anspruch 1 oder 2, **dadurch gekennzeichnet, dass** es einen Schritt der Aktivierung eines Mindestbelastungskriteriums, das auf den Motor (2) anzuwenden ist, umfasst.

4. Verfahren nach einem der vorhergehenden Ansprüche, **dadurch gekennzeichnet, dass** es einen Schritt der Erfassung der Bedingungen des Motors (2) und des Fahrzeugs umfasst, der darin besteht, die Temperatur des Motors (2) und/oder die Geschwindigkeit des Fahrzeugs zu messen und sie mit den Schwellwerten zu vergleichen, um die Aktivierung der Regeneration zu gestatten.

5. Verfahren nach einem der vorhergehenden Ansprüche, **dadurch gekennzeichnet, dass** der erste Betriebsmodus des Systems (10) zur Einspritzung von Kraftstoff in die Zylinder (8) darin besteht, die Haupteinspritzung von Kraftstoff zu verschieben.

6. Verfahren nach einem der vorhergehenden Ansprüche, **dadurch gekennzeichnet, dass** der erste Betriebsmodus des Systems (10) der Einspritzung von Kraftstoff in die Zylinder (8) darin besteht, eine frühere Nacheinspritzung durchzuführen.

7. Verfahren nach einem der vorhergehenden Ansprüche, **dadurch gekennzeichnet, dass** der zweite Betriebsmodus des Systems (10) zur Einspritzung von Kraftstoff in die Zylinder (8) darin besteht, eine spätere Nacheinspritzung durchzuführen.
